# FASCICULE DE BREVET EUROPEEN

(11) **EP 0 943 232 B1**
(45) Date de publication et mention de la délivrance du brevet: **02.04.2003**
(21) Numéro de dépôt: 99460016.1
(22) Date de dépôt: 03.03.1999
(51) Int. Cl.: A01F 25/20

(54) **Godet à rotor**
Behälter mit Förderwalze
Bucket with rotor

(30) Priorité: 18.03.1998 FR 9803562
(43) Date de publication de la demande: 22.09.1999
(73) Titulaire: Mailleux S.A., 35690 Acigne (FR)
(72) Inventeur: Mailleux, Loic, 35000 Rennes (FR)
(74) Mandataire: Le Faou, Daniel

(56) Documents cités:
- EP-A- 0 082 313
- EP-A- 0 818 137
- FR-A- 2 754 671
- US-A- 3 985 305

## Description

La présente invention concerne un godet de dessilage destiné à équiper un chargeur agricole, du type comprenant un rotor rotatif qui est entraîné par un moteur hydraulique et est porté par un bras pivotant articulé en partie supérieure du godet, ce bras étant susceptible de s'abaisser en direction de l'ouverture d'entrée du godet sous l'action d'un vérin hydraulique.

Ce type de godet est couramment monté sur un chargeur frontal, et utilisé pour prélever dans une masse de matières, par exemple des fourrages ensilés, une certaine quantité de produit.

Le rotor est un tambour, d'axe horizontal, pourvu de dents périphériques lui permettant de "mordre" dans le produit ; les matières ainsi arrachées de la masse sont repoussées à l'intérieur du godet, progressivement, au fur et à mesure du travail, grâce au montage articulé du rotor et à son mouvement de descente.

Un tel matériel est d'un usage relativement délicat, du fait que le rotor n'est pas visible de l'opérateur en cours de travail. Il est caché par le godet.

Le pivotement du bras supportant le rotor est assuré au moyen d'un distributeur hydraulique, indépendamment de la rotation du rotor. Or, en fonction de la nature et de la dureté des matières à dessiler, le rotor va mordre plus ou moins facilement dans la masse de produit ; pour obtenir une qualité de travail optimale, il importe que l'abaissement du rotor se fasse de manière conjuguée avec sa rotation, la descente du rotor devant être d'autant plus lente qu'il a du mal à pénétrer dans la masse de matières.

N'ayant pas la possibilité de voir le rotor, l'opérateur ne peut pas maîtriser ce paramètre, et le travail se fait donc de manière empirique, fonction de son expérience, et avec des risques d'effectuer un travail de mauvaise qualité (remplissage insuffisant ou excessif du godet notamment).

L'invention vise à résoudre ce problème en proposant un godet du type susmentionné avec lequel la progression du bras supportant le rotor soit contrôlé automatiquement pour s'accommoder au couple développé par le moteur hydraulique qui entraîne le rotor en rotation.

Ce résultat est obtenu grâce au fait que ledit moteur est connecté hydrauliquement au vérin par l'intermédiaire d'une valve de régulation adaptée pour ralentir automatiquement la descente du bras en cas d'élévation de pression d'alimentation du moteur.

Avantageusement, le vérin est à double-effet et l'une de ses chambres est alimentée en liquide hydraulique haute-pression, tandis que l'autre est connectée au retour basse-pression pour faire descendre le bras, le ralentissement de cette descente étant réalisé par étranglement du débit sur le conduit retour.

Selon une autre caractéristique avantageuse, la connexion hydraulique entre ledit vérin et ledit moteur comporte un clapet antiretour apte à assurer une alimentation à plein débit du vérin lors du relevage du bras.

D'autres caractéristiques et avantages de l'invention apparaîtront de la description et des dessins annexés qui va maintenant en être faite, qui présentent à simple titre d'exemple non limitatif, un mode de réalisation préféré de l'invention.

Sur ces dessins :
- la figure 1 est une vue de côté schématique de l'avant d'un tracteur agricole équipé d'un chargeur frontal pourvu d'un godet conforme à l'invention, en cours d'opération de dessilage ;
- la figure 2 est une vue représentant le godet ainsi qu'un schéma de son circuit de commande hydraulique ;

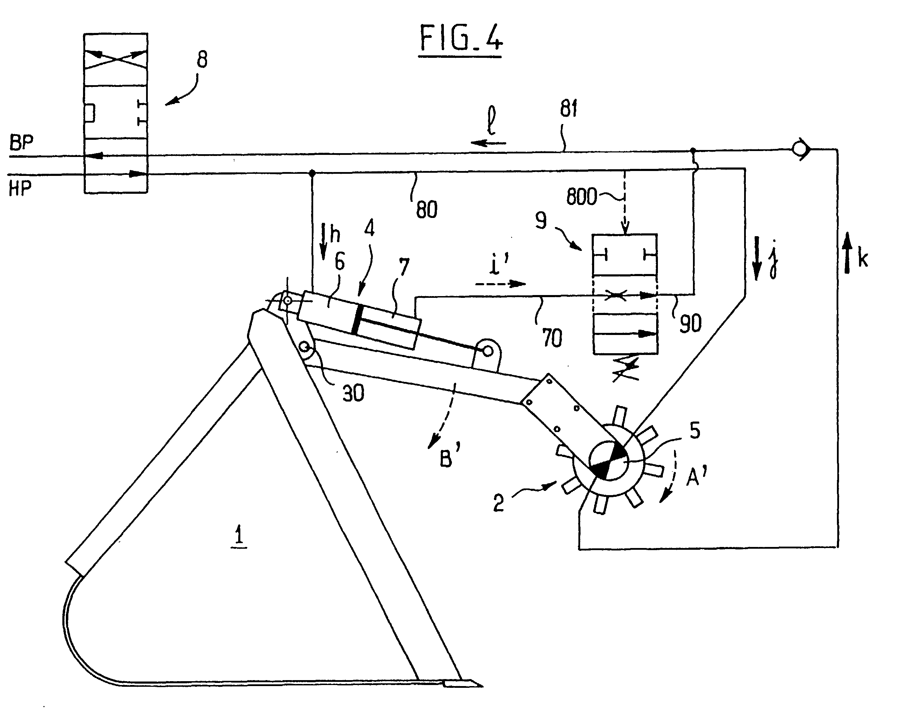

- les figures 3 et 4 sont des vues similaires à la figure 2 qui illustrent le fonctionnement du dispositif.

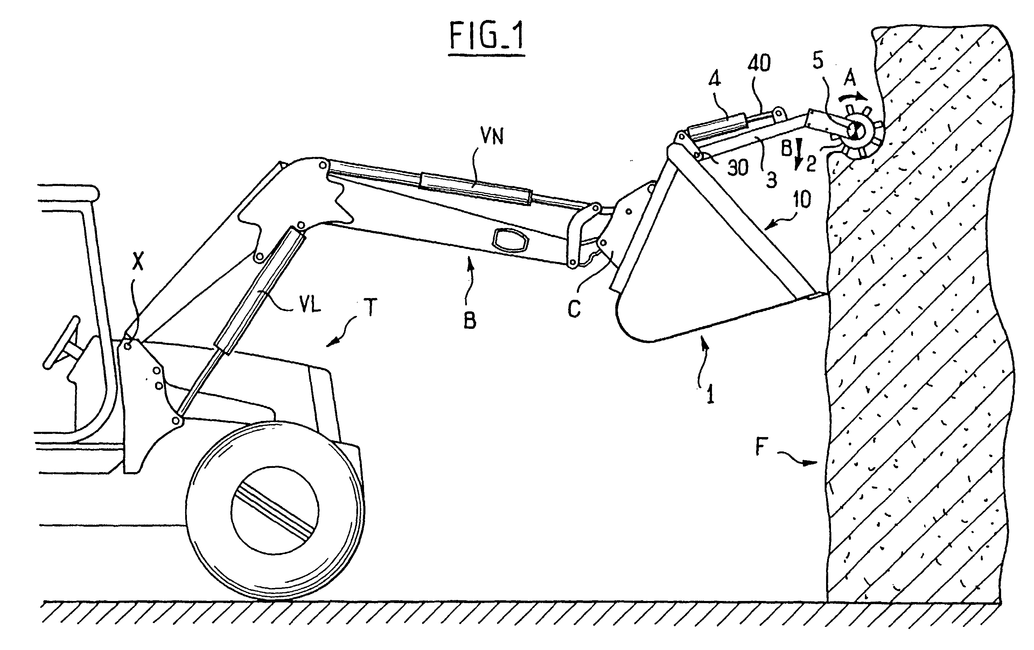

Sur la figure 1 est partiellement représenté un tracteur agricole **T** équipé à l'avant d'un chargeur frontal à brancard **B** susceptible d'être élevé ou abaissé, par pivotement autour d'un axe transversal **X** au moyen d'une paire de vérins **VL** dits "de levage" (dont un seul est visible sur cette vue de côté).

A l'avant du brancard **B** est fixé un cadre porte-outil **C** articulé, dont les mouvements sont commandés par une paire de vérins **V N** dits "de bennage".

Sur le cadre porte-outil **C** est monté un godet **1** conforme à l'invention, de forme usuelle, dont l'ouverture 10 est tournée vers l'avant et vers le haut.

A la partie supérieure du godet est monté un bras pivotant 3 dirigé vers l'extérieur par rapport à l'ouverture 10, articulé autour d'un axe 30. Par la dénomination "bras" on entend en fait un bras en deux parties, c'est-à-dire une paire de bras parallèles, un seul étant visible sur la figure, du fait qu'il s'agit d'une vue de côté sur laquelle les deux parties se superposent. A son extrémité libre, ce "bras" supporte un rotor rotatif 2, de type usuel, à dents périphériques. L'axe du rotor est disposé horizontalement et transversalement, ses extrémités étant convenablement guidées en rotation, chacun dans l'une des deux parties constitutives du bras 3, le rotor étant situé entre ces deux parties. A l'une des extrémités de l'arbre est monté un moteur hydraulique 5, fixé contre la partie correspondante.

Le mouvement du bras 3 est commandé par un vérin hydraulique 4, dont le corps est fixé au godet, et la tige au bras.

Le sens de rotation du rotor est symbolisé par la flèche **A** sur la figure 1, tandis que le mouvement de pivotement vers le bas du bras 3 - qui correspond à la mise en extension du vérin 4 - y est symbolisé par la flèche **B**.

La figure 1 illustre une opération de dessilage de matières, par exemple de fourrages **F**. Par suite de la rotation du rotor, celui-ci creuse une excavation dans la masse de fourrages, y prélevant du produit qui est amené au fur et à mesure du prélèvement à l'intérieur du godet grâce à la descente du rotor.

L'opérateur, situé dans la cabine du tracteur, agit sur les vérins **VL** et **V N** de manière à contrôler les positions en hauteur et en inclinaison du godet, ainsi que le vérin 4 pour abaisser ou relever le rotor. Mais, comme on le comprend aisément à la simple observation de la figure 1, le rotor lui est caché.

La figure 1 représente le circuit de commande hydraulique du moteur 5 et du vérin 4, circuit qui constitue l'élément fondamental de l'invention.

Le vérin 4 est à double-effet.

Les conduits d'amenée du liquide hydraulique de la source haute-pression **HP**, et de retour au réservoir - basse-pression **BP** - sont branchés à un distributeur hydraulique de commande 8, dont l'actionnement par l'opérateur se fait à l'aide d'un organe approprié, levier par exemple. Le distributeur 8 est à trois positions. Dans la position médiane (illustrée sur la figure 1), il isole le circuit hydraulique.

A titre indicatif, la valeur de la haute-pression est comprise entre 150 et 200 bar (entre 1,5 et 2.10⁷ Pa), tandis que la basse-pression est la pression atmosphérique.

Du distributeur 8 partent deux conduits hydrauliques 80, 81, qui sont branchés au moteur 5 d'entraînement du rotor. L'un d'eux, le conduit 81, porte un clapet antiretour 810 qui impose au moteur un seul sens de rotation **A**.

Le rotor ne tourne que si le conduit 80 est branché à la haute-pression, et le conduit 81 à la basse-pression.

La grande chambre 6 du vérin 4 est raccordée, par une branche 60, au conduit 80.

Sa petite chambre 7 est branchée, par un conduit 70, à une valve de régulation 9. Cette dernière se raccorde par une branche 90 au conduit 81 déjà cité. Ce raccordement est situé en aval du clapet 810 (par rapport au moteur 5, situé en amont sur la ligne retour 81).

La valve de régulation 9 est de préférence du type proportionnel. Son état est asservi à la pression du liquide passant dans le conduit 80, comme cela est figuré par la ligne en traits interrompus 800 qui la connecte à celui-ci.

Lorsque la pression dans le conduit 80 est faible, la valve 9 autorise le libre passage du liquide du conduit 70 au conduit 90, ou inversement.

Lorsque cette pression est élevée, elle interdit ce passage.

Lorsqu'on a affaire à une pression intermédiaire, le passage se fait par un étranglement, le débit autorisé étant d'autant plus faible que la pression est forte.

Ce système fonctionne de la manière décrite ci-après.

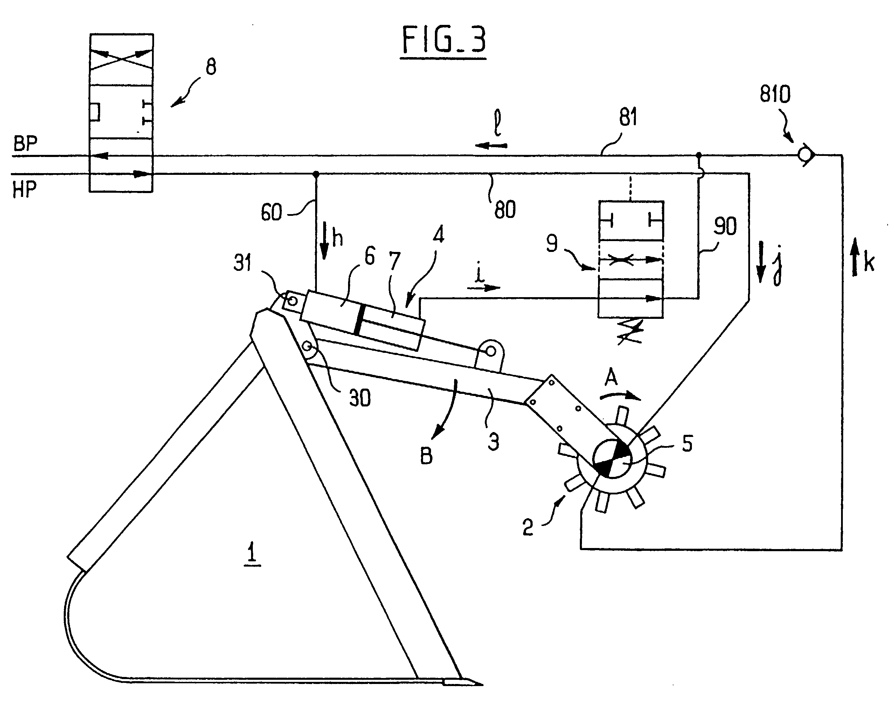

En fonctionnement normal, qui correspond à la représentation de la figure 3, le distributeur 8 est ouvert, dans une position qui correspond au branchement du conduit 80 à la haute-pression, et du conduit 81 à la basse-pression, le sens de déplacement du liquide hydraulique dans le circuit étant symbolisé par les flèches **h, i, j, k,** et **l.**

Le rotor 2 est entraîné en rotation selon **A,** son moteur 5 étant correctement alimenté par la ligne 80 (flèche **j**), avec retour au réservoir par la ligne 81 (flèche **k**).

Concomitamment, la chambre 6 du vérin 4 est alimentée (flèche **h**), tandis que la chambre 7 se vide (flèche **i**) ; le vérin est donc mis en extension, provoquant l'abaissement du bras 3 et du rotor qu'il supporte (flèche **B).**

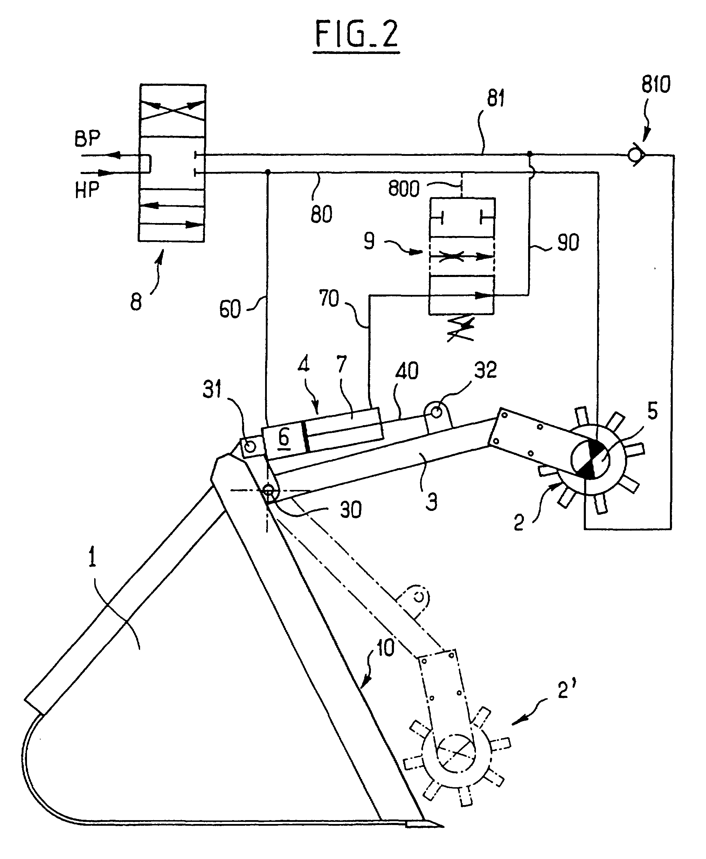

En fin de course, le rotor occupe la position 2' représentée en traits mixtes fins sur la figure 2. En principe, le godet est alors rempli de matières.

Bien entendu, à tout moment l'opérateur peut arrêter la descente du bras, en ramenant le distributeur 8 dans sa position médiane (ou neutre) dans laquelle le circuit est isolé des sources **HP** et **BP**. Ceci a aussi pour effet d'arrêter le moteur 5.

Pour relever le bras, il place le distributeur 8 en position d'alimentation inversée (ligne 80 à basse-pression, et 81 à haute-pression). Ainsi, le vérin 4 se rétracte. Le moteur 5 reste à l'arrêt en raison de la présence du clapet antiretour 810.

Il convient de remarquer que la remontée du bras se fait de manière rapide puisque, le rotor étant bloqué en rotation, la totalité du débit arrive au vérin 4, via la valve 9 (grande ouverte).

En cours de travail, il peut arriver que le rotor rencontre des matières dures, en particulier des blocs de fourrage plus compacts que les autres. Dans ce cas, le moteur 5 "peine", et ralentit comme symbolisé par la flèche en traits interrompus **A'**. Il est alors intéressant que la descente du bras se ralentisse aussi - flèche **B'** - de façon que le prélèvement des matières se fasse tout de même dans de bonnes conditions.

La présence de la valve de régulation 9 permet d'obtenir ce résultat.

En effet, le freinage du moteur engendre une augmentation du couple entraînant une surpression dans le conduit d'alimentation 80, surpression qui se répercute à la valve 9 par la ligne de captage 800. La ligne de vidage 70-90 de la chambre 7 du vérin 4 est ainsi soumise à un étranglement. Le débit **i**' dans cette ligne est donc réduit, ce qui contrarie, et freine, l'extension du vérin 4 ainsi que, corrélativement, le mouvement de descente du bras 3.

La valve 9 étant du type proportionnel, ou approximativement proportionnel, la descente du bras est d'autant plus ralentie que le moteur peine.

Au-delà d'un certain seuil de surpression, la descente s'arrête même, la valve 9 se trouvant alors dans sa position de fermeture complète.

Le système est autorégulateur (asservissement).

En effet, la descente du bras se trouvant ralentie, le rotor va à nouveau pouvoir travailler correctement et retrouver sa vitesse normale, ce qui a pour effet de ramener la valve 9 dans sa position initiale pour laquelle il n'y a pas d'étranglement sur la ligne 70-90. La descente peut alors se faire, à nouveau, à vitesse normale.

## Revendications

1. Godet de dessilage, destiné à équiper un chargeur agricole, qui comprend un rotor rotatif (2) entraîné par un moteur hydraulique (5) et porté par un bras pivotant (3) articulé en partie supérieure du godet (1), ce bras (3) étant susceptible de s'abaisser en direction de l'ouverture d'entrée (10) du godet (1) sous l'action d'un vérin hydraulique (4), **caractérisé par le fait que** ledit moteur (5) est connecté hydrauliquement au vérin (4) par l'intermédiaire d'une valve de régulation (9) adaptée pour ralentir automatiquement la descente du bras (3) en cas d'élévation de pression d'alimentation du moteur (5).

2. Godet selon la revendication 1, **caractérisé par le fait que** ledit vérin (4) est à double-effet et l'une (6) de ses chambres est alimentée en liquide hydraulique haute-pression, tandis que l'autre (7) est connectée au retour basse-pression (81) pour faire descendre le bras (3), le ralentissement de cette descente étant réalisé par étranglement du débit sur le conduit retour (70-90).

3. Godet selon la revendication 2, **caractérisé par le fait que** la connexion hydraulique entre ledit vérin (4) et ledit moteur (5) comporte un clapet antiretour (810) apte à assurer une alimentation à plein débit du vérin (4) lors du relevage du bras (3).

## Claims

1. A silage-extractor bucket for fitting to an agricultural loader, the bucket having a rotary rotor (2) driven by a hydraulic motor (5) and carried by a pivot arm (3) hinged to the top portion of the bucket (1), said arm (3) being suitable for being lowered towards the inlet opening (10) of the bucket (1) under drive from a hydraulic actuator (4), the bucket being **characterized by** the fact that said motor (5) is hydraulically connected to the actuator (4) via a regulator valve (9) adapted to slow lowering of the arm (3) automatically in the event of the feed pressure to the motor (5) rising.

2. A bucket according to claim 1, **characterized by** the fact that said actuator (4) is a double-acting actuator and one of its chambers (6) is fed with high pressure hydraulic liquid while its other chamber (7) is connected to the low pressure return (81) for lowering the arm (3), said lowering being slowed by throttling the rate of flow along the return duct (70-90).

3. A bucket according to claim 2, **characterized by** the fact that the hydraulic connection between said actuator (4) and said motor (5) includes a non-return valve (810) suitable for feeding the actuator (4) at the full flow rate while raising the arm (3).

## Patentansprüche

1. Entleerungs-Baggereimer, der dafür bestimmt ist. in einer landwirtschaftlichen Beladevorrichtung eingebaut zu sein, und der einen Drehrotor (2) aufweist, der von einem hydraulischen Motor (5) angetrieben und von einem Schwenkarm (3) getragen ist, der am oberen Bereich des Baggereimers (1) gelenkig angebracht ist, wobei sich dieser Arm (3) in Richtung der Eingangsöffnung (10) des Baggereimers (1) unter der Wirkung eines hydraulischen Stellantriebs (4) absenken kann, **dadurch gekennzeichnet, dass** der Motor (5) hydraulisch an den Stellantrieb (4) mittels eines Regelventils (9) angeschlossen ist, das dafür eingerichtet ist, das Absenken des Armes (3) im Falle des Anstiegs des Versorgungsdrucks des Motors (5) automatisch zu verlangsamen.

2. Baggereimer gemäß Anspruch 1, **dadurch gekennzeichnet, dass** der Stellantrieb (4) doppeltwirkend ausgebildet ist und eine (6) seiner Kammern mit hydraulischer Hochdruckflüssigkeit gespeist wird, während die andere (7) Kammer an den Niederdruckrücklauf (81) angeschlossen ist, um den Arm (3) absenken zu lassen, wobei die Verlangsamung dieses Absenkens durch Drosselung der Durchsatzleistung in der Rücklaufleitung (70-90) durchgeführt wird.

3. Baggereimer gemäß Anspruch 2, **dadurch gekennzeichnet, dass** der hydraulische Anschluß zwischen dem Stellantrieb (4) und dem Motor (5) ein Rückschlagventil (810) aufweist, das dazu in der Lage ist, eine Versorgung mit voller Durchsatzleistung des Stellantriebs (4) während des erneuten Anhebens des Armes (3) sicherzustellen.
